# DEMANDE DE BREVET EUROPEEN

(11) **EP 1 696 156 A2**
(43) Date de publication de la demande: **30.08.2006**
(21) Numéro de dépôt: 06290226.7
(22) Date de dépôt: 09.02.2006
(51) Int. Cl.: F16K 1/226

(54) **Robinet à papillon**

(30) Priorité: 25.02.2005 FR 0501942
(71) Demandeur: KSB S.A.S, 92230 Gennevilliers (FR)
(72) Inventeur: Wattignier, Claude, 33400 Talence (FR)
(74) Mandataire: Eidelsberg, Victor Albert

(57) **Abrégé**

Dans ce robinet à papillon décalé, le diamètre intérieur du siège (5) est inférieur au diamètre du fond de gorge (6) ménagé dans le bord du papillon. Le siège est facile à monter et a des performances équivalentes dans les deux directions.

## Description

La présente invention se rapporte aux robinets dits " à papillon décalé".

Dans un robinet à papillon décalé, l'axe de rotation du papillon en forme de disque est décalé par rapport au plan du papillon et est parallèle à ce plan. L'axe de rotation est aussi excentré par rapport à l'axe de la tuyauterie.

La combinaison du décalage et de l'excentration limitent le frottement entre le siège (joint) et la portée d'étanchéité lors de l'ouverture et de la fermeture du robinet. En conséquence, le robinet conserve ses caractéristiques d'étanchéité après un très grand nombre de manceuvres, ces caractéristiques restant conformes aux normes et spécifications les plus exigeantes. C'est pourquoi, on utilise beaucoup les robinets à papillon décalé dans le domaine de la haute pression, ainsi que dans le domaine de l'eau (adduction).

Les robinets à papillon décalé sont dotés d'un siège qui peut être réalisé en un matériau plastomère ou élastomère ou composite. Ce siège permet de réaliser la fonction d'étanchéité amont/aval lors de la fermeture du papillon. Il coopère avec une portée d'étanchéité située sur la pièce opposée pour réaliser l'étanchéité du robinet lorsque ce dernier est fermé. Cette fonction est obtenue par l'application d'une pression de contact siège/portée d'étanchéité supérieure à la pression du fluide véhiculé. Le siège peut être rendu solidaire du corps ou du papillon.

Ce type de robinet est préférentiellement utillisé pour les grands diamètres de tuyauteries et le siège peut ainsi être démonté in situ par un opérateur sans démonter le robinet de l'installation. La fixation du joint se fait généralement à l'aide d'une bride bloquée par des clames ou d'une bride appliquée par des vis. Selon d'autres modes de réalisation, le siège est parfois scellé par l'injection d'une résine polymérisable.

Ce montage du siège ou joint nécessite la manipulation d'une pièce lourde, rendant les opération de maintenance in situ difficiles et pénibles lorsqu'il faut le remplacer. Il en est de même lorsque le cas échéant il faut détruire les scellements et remettre les pièces en état pour remonter un nouveau siège.

En outre, il est important qu'en position fermée, le jeu entre le corps et le papillon soit petit à l'aval du siège, (côté opposé à la pression) afin que le siège ne s'extrude pas dans le jeu sous l'effet de la pression. Le siège est disposé dans une gorge parallèle au plan du papillon et de ce fait la géométrie de l'interface entre le bord du papillon et la partie à l'opposée sur le corps est dissymétrique vis à vis du plan de symétrie du siège lui-même. De ce fait, le comportement et la performance d'étanchéité du siège seront différents selon le sens d'application de la pression

Au brevet US 6 494 466 B1, on propose de remédier à ces inconvénients par un siège encliqueté dans la gorge du papillon. L'expérience a montré qu'un robinet de ce genre fuit.

Aux brevets US 3 282 558 et 3 986 699 on décrit des robinets ayant un siège en deux ou trois pièces engagé dans une gorge ouverte. Le montage est compliqué et la compression du siège est soumise aux aléas du montage.

L'invention pallie cet inconvénient par un robinet dont le siège peut être monté, donc remplacé bien plus facilement que jusqu'ici, dont la position du siège peut être rendue optimale afin que le robinet ait des performances équivalentes dans les deux directions quel que soit le sens d'application de la pression mais qui ne fuit pas.

L'invention a donc pour objet, un robinet comprenant un corps tubulaire cylindrique et un papillon en forme de disque, monté tournant par rapport à un axe décalé par rapport au plan du papillon et parallèle à ce plan, et un siège en anneau d'une seule pièce rapporté dans une gorge annulaire fermée sur l'un de la face intérieure du corps et du bord du papillon, l'autre d'entre eux venant par une portée d'étanchéité en contact avec le siège dans une position de fermeture du robinet et s'en écartant dans une position d'ouverture, caractérisé en ce que la différence entre le diamètre extérieur et le diamètre intérieur du siège est supérieure à la profondeur de la gorge et, lorsque la gorge est ménagée dans le bord du papillon, le diamètre intérieur du siège est inférieur au diamètre du fond de gorge et lorsque la gorge est ménagée dans la face intérieure du corps, le diamètre extérieur du siège est supérieur au diamètre du fond de gorge.

Par gorge fermée, on entend une gorge ayant un fond et non une gorge ouverte de deux côtés opposés ou obturée d'un côté par une pièce rapportée.

Grâce à ces dispositions, la face intérieure du siège lorsque, la gorge est ménagée dans le bord du papillon, ou la face extérieure du siège, lorsque la gorge est ménagée dans la face intérieure du corps, est constamment appliquée sur le fond de la gorge de sorte qu'il est maintenant aisé de produire la compression, exprimée en pourcentage de la hauteur du siège, permettant d'obtenir l'étanchéité requise suivant les pressions qui doivent être appliquées. On a maintenant compris, que les fuites provenaient du fait que le siège n'était pas appliqué sur le fond de la gorge et qu'en conséquence sa compression n'était pas bien définie.

De préférence, le diamètre intérieur du siège diffère de 2 à 7 % du diamètre du fond de gorge de manière à faciliter le montage du siège dans la gorge par déformation du siège.

Suivant un mode de réalisation préféré, le siège comporte deux rainures latérales symétriques dont le fond est à distance de la paroi latérale respective de la gorge. Le siège est ainsi constitué de deux parties reliées entre elles par un col de section réduit, représentant notamment en section droite de la moitié au deux tiers d'une section du reste du siège. Lorsque l'on comprime le siège par la fermeture du robinet, la partie du siège qui se trouve du côté opposé du fond de la gorge par rapport à la rainure absorbe les déformations, la matière du siège pouvant, le cas échéant fluer dans les rainures, tandis que l'autre partie proche du fond de la gorge reste plus stable et moins sollicitée par cet écrasement qui sert à l'accrochage mécanique dans la gorge.

De préférence, le siège comporte deux premières lèvres latérales symétriques l'une de l'autre, la distance entre le fond de la gorge et les lèvres étant plus petite que la distance entre le fond de la gorge et le fond des rainures. Chaque première lèvre vient en contact avec la paroi latérale de la gorge par une surface, de manière à empêcher que le siège soit arraché par les forces de frottement et de pression.

De préférence, le siège comporte deux deuxièmes lèvres latérales symétriques l'une de l'autre, disposées entre le fond de la gorge et les premières lèvres et à bord libre effilé et tournées dans le sens opposé à celui allant vers le fond de la gorge. Ces deuxièmes lèvres assurent l'étanchéité. Du fluide ne peut pas pénétrer en dessous d'elles et établir une pression d'expulsion.

L'invention vise également, un siège annulaire ayant une face intérieure (extérieure) cylindrique et une face extérieure (intérieure) torique, qui comprend deux premières lèvres latérales symétriques l'une de l'autre et deux rainures latérales symétriques l'une de l'autre, la distance entre les fonds des rainures latérales et la face cylindrique étant plus grande que la distance entre les lèvres et la face cylindrique.

Le siège est en une matière plastomère ou élastomère.

De préférence, il comprend deux deuxièmes lèvres latérales symétriques l'une de l'autre entre les premières lèvres et la face cylindrique, à bord libre effilé et tournées dans le sens opposé à celui allant vers la face cylindrique.

Aux dessins annexés, donnés uniquement à titre d'exemple :
la figure 1 est une vue en coupe d'un robinet à papillon décalé suivant l'invention entre deux brides de tuyauterie, suivant l'invention en partie haute de la figure et suivant la technique antérieure en partie basse de la figure.
les figures 2 et 3 sont des vues en coupe partielle du corps, du papillon et du siège suivant des modes de réalisation existants,
les figures 4a et 4b ainsi que 5a et 5b sont des vues semblables aux figures 2 et 3 d'un mode de réalisation suivant l'invention avec le siège fixé soit dans le corps soit sur le bord du papillon,
les figures 6 et 7 sont des vues à plus grande échelle illustrant l'effet autoclave d'un mode de réalisation suivant l'invention,
la figure 8 est une section transversale du siège montrant la structure du siège en deux parties principales reliées entre elles par une rainure étroite.

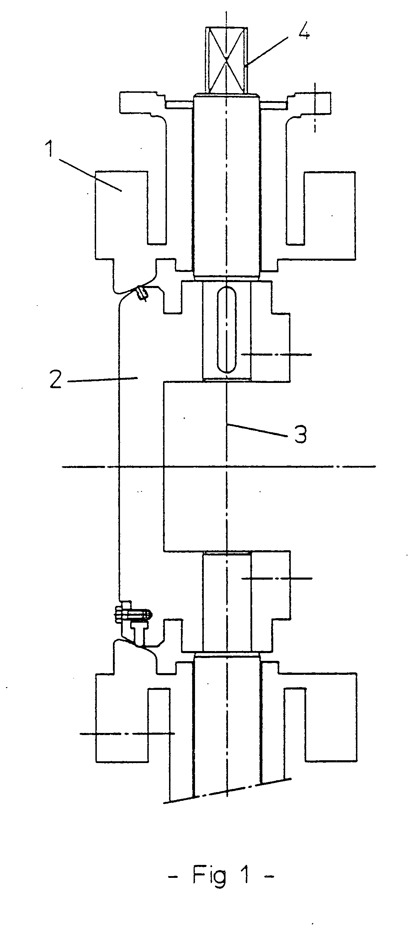

Le robinet à papillon décalé suivant l'invention est monté à la figure 1 entre deux brides d'une tuyauterie.

Le robinet comporte essentiellement un corps 1 tubulaire cylindrique et un papillon 2 en forme de disque monté tournant par rapport à un axe 3 décalé par rapport au plan du papillon et parallèle à ce plan. Un actionneur 4 du robinet permet de faire tourner le papillon par rapport à l'axe 3. Cet axe 3 est également décentré par rapport à l'axe de la tuyauterie.

Entre le corps 1 et le papillon 2 se trouve un siège 5 en en forme d'anneau que l'on voit mieux aux figures 2 à 8. A la partie inférieure de la figure 1 (opposée à l'actionneur) est représentée un mode de réalisation courant, tandis qu'à la partie supérieure (côté actionneur) est représenté un mode de réalisation selon l'invention.

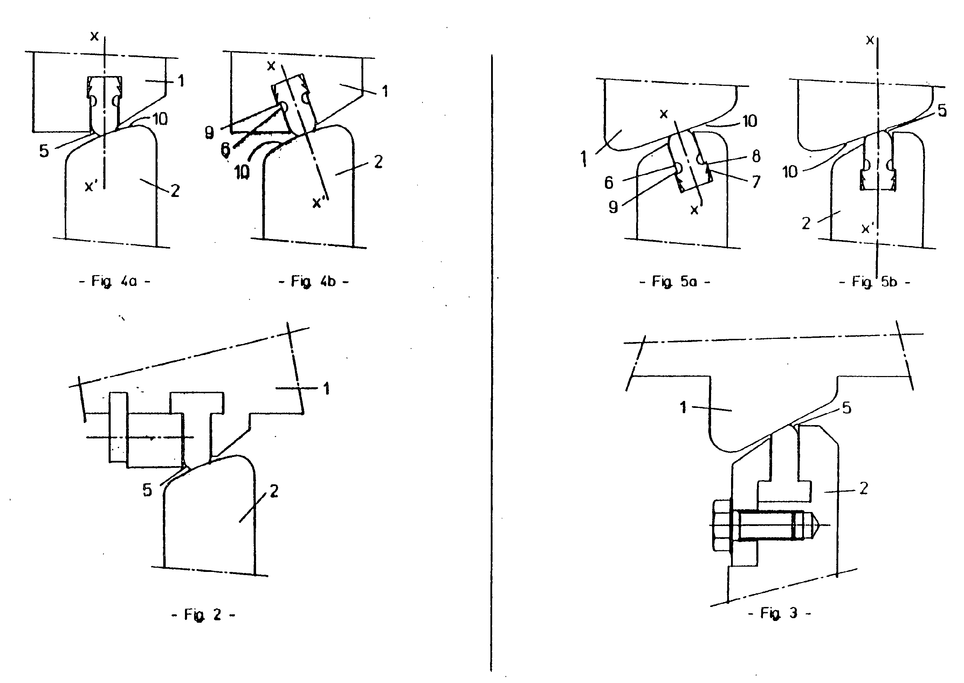

Les figures 2 et 3 montrent le détail de modes de réalisation courant avec éléments auxiliaires de fixation du siège respectivement sur corps et sur le bord du papillon.

Aux figures 4a et 4b, le siège 5 de section transversale en forme de T est encliqueté dans une gorge 6 de section transversale en forme de T du corps 1. Le siège 5 comporte deux lèvres 7, 8 qui s'appliquent à la paroi de la gorge à une profondeur plus grande qu'un épaulement 9 définissant la barre du T de la gorge 6. La figure 4a montre une disposition où le plan XX' de symétrie du siège est incliné par rapport à la portée 10 du papillon et la figure 4b la position optimale où le plan XX' de symétrie du siège est perpendiculaire à la portée 10 d'étanchéité.

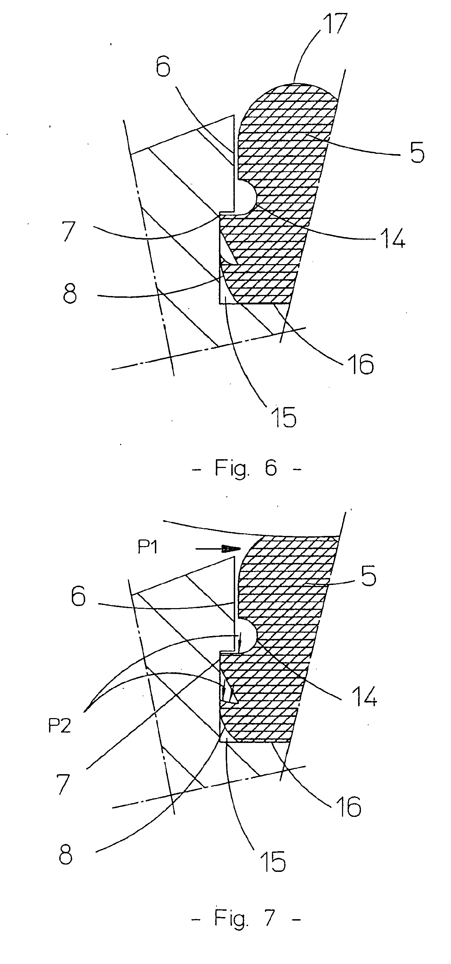

Il en va de même aux figures 5a et 5b, mais cette fois-ci, la gorge 6 de réception du siège 5 est usinée sur le bord périphérique du papillon 2 et la portée 10 est sur le corps 1.

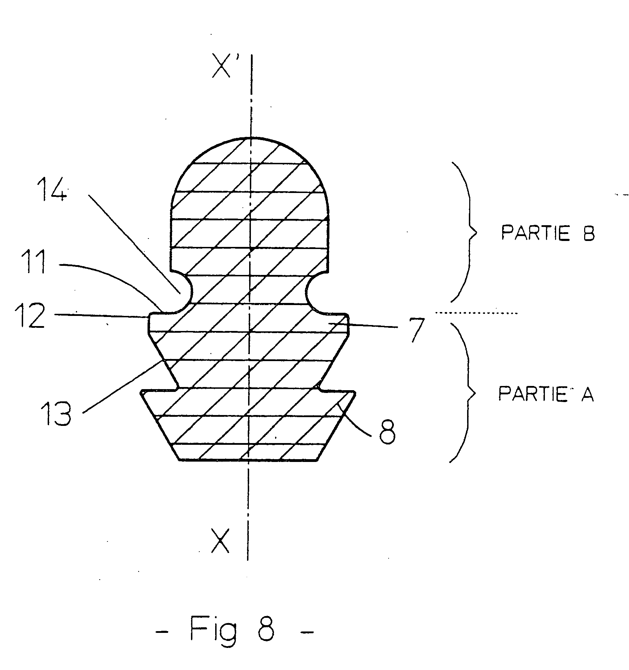

La figure 6 représente la position du siège 5 dans le papillon 2 lorsqu'il n'y a pas de pression dans la tuyauterie, tandis qu'à la figure 5, la pression est illustrée par une flèche unique P1, la pression s'appliquant sur les lèvres 7, 8 du siège étant représentée par des flèches multiples P2 lorsque le robinet est fermé avec le siège en contact avec la portée d'étanchéité. Le diamètre de la face formant le fond 15 de la gorge est plus grand que le diamètre de la face 16 cylindrique intérieure du siège. La face 17 extérieure du siège est torique. Dans le cas où la gorge est ménagée dans le corps 1, la face 16 cylindrique a un diamètre plus grand que celui du fond de la gorge On voit à la figure 7 que la pression déforme de plus en plus les lèvres 7, 8 en les appliquant de plus en plus à la paroi intérieure de la gorge 6, ce qui assure un effet autoclave et renforce l'étanchéité entre le siège et la gorge. La figure 8 détaille la section transversale du siège montrant les deux parties principales :
- la partie A " statique " en forme de harpon ayant deux lèvres 7, 8 assurant l'accrochage positif dans la gorge ainsi que l'étanchéité statique du siège dans cette même gorge, En section transversale, la lèvre 7 suit immédiatement un col 14 par une face 11 perpendiculaire à l'axe XX' (qui est la trace du plan de symétrie du siège), suivie elle-même d'une face tronquée 12 sensiblement parallèle à l'axe XX', elle-même suivie d'une face 13 inclinée par rapport à l'axe XX' et s'en rapprochant à partir de la face 12. Il en va de même pour la lèvre 8 qui, toutefois, n'a pas de face tronquée. Le fond de la nervure 14 est à distance de la paroi latérale de la gorge 6.
- la partie B " dynamique " de forme torique coopérant avec la portée d'étanchéité pour assurer l'étanchéité dynamique du robinet,
- le col 14 de liaison entre les deux parties principales allouant une indépendance de mouvement radial (suivant l'axe XX') de la partie B par rapport à la partie A.

## Revendications

1. Robinet comprenant un corps (1) tubulaire cylindrique et un papillon (2) en forme de disque, monté tournant par rapport à un axe (3) décalé par rapport au plan du papillon (2) et parallèle à ce plan, et un siège (5) en anneau en une seule pièce rapporté dans une gorge (6) annulaire fermée sur l'un de la face intérieure du corps (1) et du bord du papillon (2), l'autre d'entre eux venant par une portée (10) d'étanchéité en contact avec le siège (5) dans une position de fermeture du robinet et s'en écartant dans une position d'ouverture, **caractérisé en ce que** la différence entre le diamètre extérieur et le diamètre intérieur du siège (5) est supérieure à la profondeur de la gorge (6) et, lorsque la gorge (6) est ménagée dans le bord du papillon (2), le diamètre intérieur du siège (5) est inférieur au diamètre du fond de gorge (6) et, lorsque la gorge (6) est ménagée dans la face intérieure du corps, le diamètre extérieur du siège (5) est supérieur au diamètre du fond de gorge (6).

2. Robinet suivant la revendication 1, **caractérisé en ce que** le diamètre intérieur du siège diffère de 2 à 7% du diamètre du fond de gorge.

3. Robinet suivant la revendication 1 ou 2, **caractérisé en ce que** le siège comporte deux rainures (14) latérales symétriques l'une de l'autre dont le fond est à distance de la paroi latérale respective de la gorge.

4. Robinet suivant la revendication 1, 2 ou 3, **caractérisé en ce que** le siège comporte deux premières lèvres (7) latérales symétriques l'une de l'autre, la distance entre le fond de la gorge et les lèvres (7) étant plus petite que la distance entre le fond de la gorge et le fond des rainures.

5. Robinet suivant la revendication 4, **caractérisé en ce que** le siège comporte deux deuxièmes lèvres (8) latérales symétriques l'une de l'autre, disposées entre le fond de la gorge et les premières lèvres et à bord libre effilé et tournées dans le sens opposé à celui allant vers le fond de la gorge.
